# EUROPÄISCHE PATENTSCHRIFT

(11) **EP 2 017 469 B1**
(45) Veröffentlichungstag und Bekanntmachung des Hinweises auf die Patenterteilung: **21.09.2011**
(21) Anmeldenummer: 08004321.9
(22) Anmeldetag: 08.03.2008
(51) Int. Cl.: F03D 7/02, F03D 7/04

(54) **Verfahren zum Betreiben einer Windenergieanlage**
Method for operating a wind farm
Procédé de fonctionnement d'une éolienne

(30) Priorität: 26.03.2007 DE 102007014863
(43) Veröffentlichungstag der Anmeldung: 21.01.2009
(73) Patentinhaber: REpower Systems AG, 22297 Hamburg (DE)
(72) Erfinder: Altemark, Jens, 24768 Rendsburg (DE)
(74) Vertreter: Groth, Wieland

(56) Entgegenhaltungen:
- EP-A- 1 132 614
- WO-A-02/075153
- DE-A1- 10 127 451
- DE-A1-102004 056 255
- DE-A1-102005 029 000
- US-A- 5 289 041

## Beschreibung

Die Erfindung betrifft ein Verfahren zum Betreiben einer Windenergieanlage sowie eine Windenergieanlage zur Durchführung eines solchen Verfahrens.

Verfahren zum Betrieb von Windenergleanlagen sind Im Stand der Technik hinlänglich bekannt. Aus der DE 101 27 451 A1 ist ein Verfahren zur Steuerung einer Windenergieanlage bekannt, indem eine Betriebseinstellung wie etwa die Wickelstellung eines Rotorblattes periodisch innerhalb bestimmter Grenzwerte variiert und während dessen die Leistungsabgabe der Windenergieanlage geprüft wird. Dabei wird die Leistungsabgabe während der Variation mit der Leistungsabgabe der ursprünglichen Betriebseinstellung verglichen und gegebenenfalls wird die Betriebseinstellung verändert, um die Leistungsabgabe zu optimieren.

Nachteilig an dem oben beschriebenen Verfahren ist unter anderem, dass durch die periodische Variation eine periodische Verringerung der Abgabeleistung festgestellt werden kann, da die Windenergieanlage Immer wieder Ihre optimale Position vertässt. Insbesondere ist dieses Verfahren nur für eine Optimierung In einem stabilen Betriebspunkt geeignet und nicht geeignet, dynamische Abläufe der Windenergieanlage zu optimieren bei denen eine Variation der Betriebsparameter während des Ablaufs eines Prozesses nicht möglich ist.

In der WO 02/075153 A1 ist ein Verfahren beschrieben, mit dem die Schwingung eines Turmes einer Windenergieanlage überwacht wird und die Windenergieanlage bei Überschreiten einer maximalen Amplitude stillgesetzt wird.

Die DE 10 2005 029 000 A1 betrifft ein Verfahren zur Regelung der Drehzahl eines Rotors einer Windenergieanlage, indem ein erster Drehzahlsollwert und ein zweiter Drehzahlsollwert zur Verfügung gestellt werden, die gezielt verstimmt werden. Im Teillastbereich wird der Drehzahlsollwert des Blattwinkelreglers höher eingestellt als der optimale Drehzahlsollwert, während der Drehzahlsollwert des Drehmomentreglers im Volllastbereich tiefer eingestellt wird als optimal. Dadurch wird die Blattwinkelsteuerung erst bei stärkeren positiven Böen bzw. die Drehmomentsteuerung erst bei stärkeren negativen Böen aktiv.

In der EP 1 132 614 A2 ist ein Regelsystem zur Erhöhung der Wirtschsftlichkeit einer Windenergieanlage beschrieben, wobei das Alter der Windkraftanlage mitberücksichtigt wird und ein Schädigungsgrad für die gesamte Turbine bestimmt wird.

Aus der US 5,289,041 ist ein Verfahren zur Optimierung von Betriebsparametern von Windkraftanlagen beschrieben, wobei Testreihen zu Intervallgrenzen durchgeführt und zu den Testreihen Gütemaße gebildet werden.

In der DE 101 27 451 A 1 ist ein Verfahren zur Steuerung einer Windkraftanlage beschrieben, bei dem von Zeit zu Zeit Betriebseinstellungen variiert werden, um eine optimale Einstellung zu finden.

Es ist Aufgabe der vorliegenden Erfindung, ein Verfahren zum Betreiben einer Windenergieanlage gemäß dem Stand der Technik und eine Windenergleanlage zur Durchführung eines solchen Verfahrens zur Verfügung zu stellen, das die oben genannten Nachteile vermeidet.

Die Aufgabe wird in ihrem ersten Aspekt durch ein eingangs genanntes Verfahren gelöst, indem beim Erreichen eines ersten vorgebbaren Grenzwerts durch einen ersten Parameter ein Prozess automatisch gestartet wird, dessen Ablauf durch Messen eines zweiten Parameters und Vergleichen der Messwerte des zweiten Parameters mit dem zweiten vorgebbaren Grenzwert überwacht wird und beim Erreichen des zweiten Grenzwertes durch den zweiten Parameter der erste vorgebbare Grenzwert verändert wird.

Erfindungsgemäß wird dem vorschnellen Ändern der Grenzwerte dadurch entgegengewirkt, dass der erste Grenzwert allenfalls bei Unterschreiten einer minimalen Betriebsdauer verändert wird, wobei die minimale Betriebsdauer zwischen dem Startzeitpunkt des Prozesses und dem Zeitpunkt des ersten darauf folgenden Erreichens des zweiten Grenzwertes definiert ist.

Zum Betrieb einer Windenergieanlage werden verschiedene Prozesse durchgeführt. Gemeint sind Prozesse wie beispielsweise das Anfahren, das Herunterfahren der Windenergieanlage und das Nachführen des Maschinenhauses in die Windrichtung. Die Prozesse werden gestartet und/oder gestoppt, wenn Grenzwerte von gemessenen Parametern erreicht werden. Beispielsweise wird die Windenergieanlage angefahren, sobald ein Windgeschwindigkeitsgrenzwert oder ein Grenzwert einer Rotordrehzahl im Leerlauf durch gemessene Werte eines Parameters überschritten wird.

Weil die gemessenen Parameterwerte naturgegebenen Schwankungen unterliegen, kann es zu unzweckmäßigen Prozessabläufen kommen. Die Windstärke unterliegt ständig Schwankungen. Somit kann die Windenergieanlage beispielsweise aufgrund von Windböen zu früh angefahren oder das Maschinenhaus nachgeführt werden, weil eine vereinzelte Windböe Grenzwerte erreicht, obwohl ein solcher Prozess anschließend keine hinreichende bzw. gesteigerte Leistungsabgabe bewirkt.

Es hat sich gezeigt, dass ein Verfahren zum Betrieb einer Windenergieanlage verbessert werden kann, indem Grenzwerte von Parametern lernend verändert werden. Dadurch kann die Wahrscheinlichkeit eines optimierten Prozessablaufs gesteigert werden.

Dazu werden Grenzwerte erfindungsgemäß verändert, indem durch Veränderung der Höhe ihres Wertes Informationen über einen vorher abgelaufenen durch Erreichen des Grenzwertes ausgelösten aber im Ergebnis nicht optimierten Prozesses gespeichert werden.

Einen weiteren Vorteil der Erfindung stellt die Kalibrierung der Messeinrichtung zum Erfassen des ersten Parameters dar. Messeinrichtungen sind hinsichtlich ihrer Genauigkeit auf ihren maximalen Messbereich ausgelegt. Sofern die Messeinrichtungen aber in ihrem unteren Messbereich betrieben werden, ist der Fehler im Verhältnis zum gemessenen Parameter sehr groß. Der zweite Parameter wird üblicherweise mit einer Messeinrichtung gemessen, die für den Messbereich ausgelegt ist. Über das vorgenannte Verfahren wird daher eine systematische Fehlmessung im unteren Messbereich korrigiert, die Messeinrichtung der ersten Messgröße wird sozusagen mit der zweiten Messeinrichtung im unteren Bereich "kalibriert".
In einer Weiterentwicklung des erfinderischen Verfahrens wird der Prozess durch den ersten oder wenigstens einen weiteren ersten Parameter automatisch gestartet, wenn der erste bzw. ein weiterer erster vorgebbarer Grenzwert erreicht wird. Der Prozess wird durch den zweiten Parameter überwacht. Bei Erreichen des zweiten Grenzwertes durch den zweiten Parameter wird nur der erste vorgebbare Grenzwert verändert, der zum Auslösen des Prozesses geführt hat. Es ist auch denkbar, den Prozess durch den zweiten und wenigstens einen weiteren zweiten Parameter zu überwachen, denen der zweite bzw. ein weiterer zweiter vorgebbarer Grenzwert zugeordnet sind. Bei Erreichen einer der zweiten Grenzwerte wird dann ebenfalls nur der erste vorgebbare Grenzwert geändert, der zum Auslösen des Prozesses führte.

Vorzugsweise handelt es sich bei dem Prozess um einen Start/Stopp-Vorgang, insbesondere um das Anfahren und Herunterfahren der Windenergieanlage. Die Windenergieanlage wird beim Überschreiten eines ersten Grenzwertes hochgefahren. Bei dem ersten Grenzwert kann es sich um einen Windgeschwindigkeitsgrenzwert und bei dem ersten Parameter um eine Windgeschwindigkeit handeln. Als Windgeschwindigkeit kann eine momentane Windgeschwindigkeit oder eine über eine kurze Zeitdauer gemittelte Windgeschwindigkeit gewählt werden. Beim Überschreiten des ersten vorgebbaren Grenzwertes durch die gemessene Windgeschwindigkeit wird die Windenergieanlage angefahren. Nachdem die Anlage angefahren ist, wird ihr Regelbetrieb durch Messen des zweiten Parameters überwacht, der beispielsweise die elektrische Abgabeleistung der Windenergieanlage ist. Wenn die elektrische Abgabeleistung der Windenergieanlage während des Regelbetriebs unter den zugeordneten zweiten Grenzwert sinkt, kann die Windenergieanlage abgeschaltet werden. Für den Fall, dass die elektrische Abgabeleistung unter dem vorgebbaren Leistungsgrenzwert liegt oder sinkt, ist ein wirtschaftlicher Betrieb der Windenergieanlage nicht mehr gewährleistet. Erfindungsgemäß wird die Windenergieanlage dann heruntergefahren und zusätzlich der erste Grenzwert verändert. Der Windgeschwindigkeitsgrenzwert wird angehoben. Dadurch ist in diesem speziellen Fall die allgemeine Vorgabe gewährleistet, dass der erste vorgebbare Grenzwert so geändert wird, dass das Erreichen des zweiten vorgebbaren Grenzwertes beim nochmaligen Ausführen des Prozesses unwahrscheinlicher wird.

Das Verfahren bewirkt, dass der Grenzwert der Windgeschwindigkeit jeder Windenergieanlage an die individuellen Gegebenheiten der Windenergieanlage angepasst wird. So kann durch das Verfahren beispielsweise ein ungewöhnlich großer Gradient in der Windgeschwindigkeit über den Rotordurchmesser im Startverhalten berücksichtigt werden oder es wird beispielsweise eine Ungenauigkeit des Anemometers bei niedrigen Windgeschwindigkeiten über diesen Prozess korrigiert. Der Rotor ist dabei sozusagen das "Riesenanemometer", dass das Anemometer über das erfindungsgemäße Verfahren kalibriert.

In einer Ausführungsform der Erfindung wird die Drehzahl des Rotors im Leerlauf als erster Parameter gewählt. Im Leerlauf oder Stillstand der Windenergieanlage dreht sich der Rotor zwar, aber es wird kein Strom erzeugt. Bei Überschreiten eines Drehzahlgrenzwertes wird der Startvorgang ausgelöst. Als zweiter Parameter kann wiederum die Abgabeleistung oder der angegebene Strom gemessen werden und bei Unterschreiten eines Leistungs- bzw. Stromgrenzwertes wird die Windenergieanlage heruntergefahren und der Drehzahlgrenzwert nach Oben verändert.

In einer weiteren Ausführungsform der Erfindung kann es sich bei dem Prozess um einen Verstellvorgang der Windrichtungsnachführung handeln. In dem Fall wird als erster Parameter ein Winkel der momentanen Windrichtung zur Ausrichtung der Windenergieanlage gewählt. Beim Überschreiten eines vorgebbaren Grenzwinkels wird der Rotor mit Maschinenhaus nachgeführt. Problematisch ist dieses Nachführen bei böigem Wind mit schnell veränderlichen Windrichtungen. Um ein ständiges Nachführen der Windenergieanlage zu verhindern, wird auch hier ein zweiter Parameter, vorzugsweise fortlaufend, gemessen. Dabei kann es sich ebenfalls um die Leistungsabgabe der Windenergieanlage, aber auch um den durch die Windenergieanlage erzeugten Strom handeln. Sollte der Rotor aufgrund einer böigen Windrichtungsänderung nachgeführt worden sein, werden die Leistungsabgabewerte unterhalb eines vorgegebenen Leistungsabgabegrenzwertes fallen, weil die Hauptwindrichtung keine entsprechende Änderung mitgemacht hat. Um zukünftig derartige nicht zielführende Nachführungen zu verhindern, wird der Windrichtungswinkel erhöht.

Vorzugsweise sind der Anlagensteuerung Standardgrenzwerte des ersten und zweiten vorgebbaren Grenzwertes eingegeben, die den geographischen, jahreszeitlichen u.ä. Gegebenheiten am Aufstellungsort der Windenergieanlage über das gesamte Jahr gesehen optimal angepasst sind. Günstigerweise wird der veränderte erste und/oder zweite Grenzwert nach einer vorgebbaren Regelbetriebszeit auf den jeweiligen Standardgrenzwert zurückgesetzt.

Erfindungsgemäß wird dem vorschnellen Ändern der Grenzwerte dadurch entgegen gewirkt, dass der erste Grenzwert allenfalls bei Unterschreiten einer minimalen Betriebsdauer verändert wird, wobei die minimale Betriebsdauer zwischen dem Startzeitpunkt des Prozesses und dem Zeitpunkt des ersten darauf folgenden Erreichens des zweiten Grenzwertes definiert ist. Sollte die Windenergieanlage angefahren sein und im Regelbetrieb übergegangen sein und der Grenzwert der Leistungsabgabe wird z.B. erst nach einem etwa mehrstündigen Zeitraum unterschritten, ist es nicht notwendig, den Windgeschwindigkeitgrenzwert zu ändern.

In einer weiteren bevorzugten Ausführungsform der Erfindung wird der erste vorgebbare Grenzwert so geändert, dass sofern der zweite Grenzwert beim Durchführen des Prozesses durch den zweiten Parameter nicht erreicht wird, das Erreichen des zweiten vorgebbaren Grenzwertes beim Ausführen des Prozesses wahrscheinlicher wird. Wenn der zweite Grenzwert, der beispielsweise die Leistungsabgabe der Windenergieanlage ist, im Regelbetrieb nicht erreicht wird, wird der Windgeschwindigkeitsgrenzwert gesenkt, um ein nochmaliges Anfahren der Windenergieanlage zu erleichtern. Dadurch wird erreicht, dass die Windenergieanlage eher den zweiten Grenzwert erreicht und sich der zweite Grenzwert immer nahe am Optimum befindet, also nicht nur in eine Richtung geändert wird.

Die Aufgabe wird hinsichtlich der Windenergieanlage durch eine eingangs genannte Windenergieanlage gelöst mit einer ersten Messeinrichtung für einen ersten Parameter und einer zweiten Messeinrichtung für einen zweiten Parameter, die mit einer Anlagensteuerung in Verbindung stehen, in der ein erster Grenzwert des ersten Parameters und ein zweiter Grenzwert des zweiten Parameters abgelegt sind und die beim Erreichen des ersten Grenzwertes durch den ersten Parameter einen Prozess automatisch startet und dessen Ablauf durch Vergleichen der Messwerte des zweiten Parameters mit dem zweiten vorgebbaren Grenzwert überwacht und beim Erreichen des zweiten Grenzwertes durch den zweiten Parameter den ersten vorgebbaren Grenzwert verändert.

In der Anlagensteuerung ist ein erster Grenzwert abgelegt, der notwendige Bedingung für den Beginn des Prozesses ist. Durch die Messeinrichtung werden die Werte des zugeordneten ersten Parameters vorzugsweise fortlaufend bestimmt und beim Erreichen des ersten Grenzwertes wird der Prozess, beispielsweise das Anfahren der Windenergieanlage oder das Nachführen des Maschinenhauses, gestartet. Der Prozess wird durch einen durch die zweite Messeinrichtung gemessen zweiten Parameter überwacht. Bei dem zweiten Parameter kann es sich um die Leistungsabgabe der Windenergieanlage handeln, den abgegebenen Strom der Windenergieanlage, aber auch um die Windgeschwindigkeit selber handeln.

Günstigenfalls weist die Windenergieanlage eine Abschaltautomatik auf, die durch die Anlagensteuerung nach Erreichen des zweiten Grenzwertes angesteuert wird. Sackt beispielsweise die Leistungsabgabe der Windenergieanlage unter den Grenzwert der Leistungsabgabe oder sinkt die Windgeschwindigkeit oder Drehzahl unter einen Windgeschwindigkeits- bzw. Drehzahlgrenzwert, so wird die Anlage automatisch heruntergefahren, weil sie nicht mehr wirtschaftlich arbeitet.

In einer weiteren bevorzugten Ausführungsform der Erfindung ist ein Zeitmesser vorgesehen, der mit der Anlagensteuerung in Verbindung steht. In der Anlagensteuerung ist zusätzlich eine minimale Betriebsdauer abgelegt, die zwischen des Startzeitpunkt des Prozesses und dem Zeitpunkt des ersten darauf folgenden Erreichens des zweiten Grenzwertes definiert ist. Die Anlagensteuerung ändert den ersten Grenzwert erst, wenn die minimale Betriebsdauer unterschritten wird. Damit wird der Tatsache Rechnung getragen, dass der erste Grenzwert als auch der zweite Grenzwert grundsätzlich den lokalen Gegebenheiten des Standpunktes der Windenergieanlage optimal im Jahresmittel angepasst sind und nur vorübergehend geändert werden sollten, wenn ein zu schnelles und ständiges An- und Abschalten der Windenergieanlage bzw. Nachführen des Rotors Funktionsteile der Windenergieanlage zu stark belasten würde.

Bei der ersten Messeinrichtung kann es sich beispielsweise um einen Drehzahlmesser, ein Anemometer, ein Thermometer, ein Spannungsmesser oder ein Frequenzmesser handeln, bei der zweiten Messeinrichtung kann es sich um einen Drehzahlmesser, ein Anemometer, einen Strommesser oder einen Leistungsmesser handeln. Es sind jedoch auch andere Messeinrichtungen denkbar.
Die Erfindung wird anhand eines Ausführungsbeispieles in einer Figur beschrieben. Dabei zeigt:

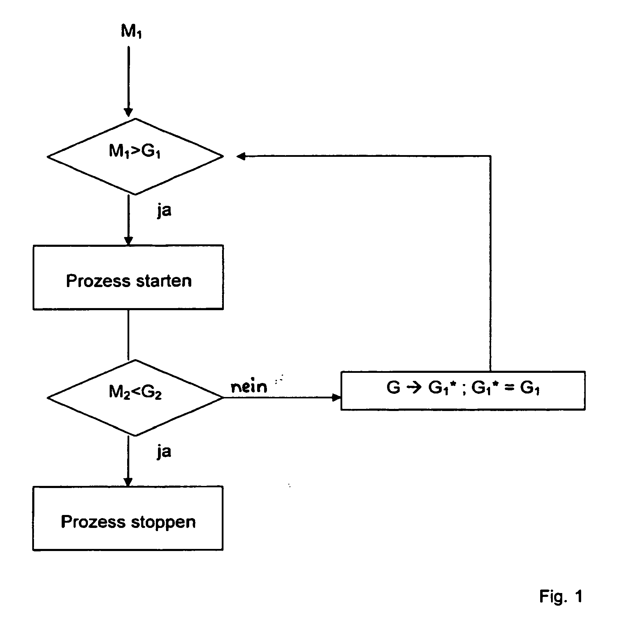

- Fig. 1: ein Flussdiagramm eines erfindungsgemäßen Verfahrens.

Das anhand von Fig. 1 beispielhaft beschriebene Verfahren dient zum Starten einer Windenergieanlage. Die Werte eines ersten Parameters werden fortlaufend durch eine erste Messeinrichtung gemessen. In diesem Ausführungsbeispiel wird als erster Parameter die Windgeschwindigkeit M₁ gewählt. Zur Messung der Windgeschwindigkeit M₁ ist auf dem Maschinenhaus der Windenergieanlage ein die erste Messeinrichtung verkörperndes Anemometer befestigt. Das Anemometer misst die momentane Windgeschwindigkeit M₁. Die Messwerte der momentanen Windgeschwindigkeit M₁ werden einer Anlagensteuerung zugeführt. In der Anlagesteuerung ist ein Messwert der Windgeschwindigkeit M₁ mit einem in der Anlangensteuerung abgelegten ersten Grenzwert G₁ der Windgeschwindigkeit vergleichenden Vergleichseinrichtung vorgesehen. Der erste Grenzwert G₁ ist veränderbar und in verschiedenen vorgebbaren Größen in der Anlagensteuerung speicherbar.

Wenn die gemessene momentane Windgeschwindigkeit M₁ den vorgegebenen Windgeschwindigkeitsgrenzwert G₁ überschreitet, wird der Anfahrvorgang der Windenergieanlage gestartet. Dazu werden Rotorblätter aus der so genannten Fahnenstellung heraus quer in den Wind gedreht, und der Rotor setzt sich durch die Windeinwirkung in Bewegung. Nach Erreichen einer vorgegebenen Rotordrehzahl wird der Generator mit dem elektrischen Netz synchronisiert und über einen Schalter angekoppelt.

Wenigstens während des Betriebs der Windenergieanlage wird fortlaufend ein zweiter Parameter gemessen. Die Messwerte des zweiten Parameters werden ebenfalls der Anlagensteuerung zugeführt und dort werden die Werte des zweiten Parameters mit einem zweiten Grenzwert fortlaufend verglichen. In diesem Ausführungsbeispiel wird als zweiter Parameter die elektrische Abgabeleistung M₂ der Windenergieanlage gewählt und der zweite Grenzwert ist ein elektrischer Leistungswert G₂.

In diesem Ausführungsbeispiel wird die elektrische Abgabeleistung noch nicht während des Anfahrvorgangs der Windenergieanlage gemessen, sondern erst nachdem die Windenergieanlage ihren Regelbetrieb aufgenommen hat. Bei größeren Windenergieanlagen erfolgt quasi eine zeitliche Mittelung der elektrischen Abgabeleistung, weil der Rotor ein großes Trägheitsmoment aufweist und damit äußerste Höhen und Tiefen der Drehzahl geglättet werden. Die Rotorträgheit verstetigt damit die elektrische Abgabeleistung.

Wenn die Messwerte die elektrischen Abgabeleistung M₂ den elektrischen Leistungsgrenzwert G₂ unterschreiten, gibt die Windenergieanlage zu wenig Strom ab, um rentabel arbeiten zu können. In diesem Fall wird die Windenergieanlage automatisch heruntergefahren und ausgeschaltet. Die Anlagensteuerung umfasst dazu die Anfahr- und Herunterfahrautomatik der Windenergieanlage.

Sollte der zeitliche Abstand zwischen Anfahr- und Herunterfahrvorgang der Windenergieanlage eine vorgegebene Mindestdauer unterschreiten, setzt die Anlagensteuerung automatisch den Windgeschwindigkeitsgrenzwert G₁ um einen vorgegebenen Betrag hoch. Der Windgeschwindigkeitsgrenzwert wird hier um etwa 15% des Absolutwertes des ursprünglichen Windgeschwindigkeitsgrenzwertes G₁ erhöht.

Aufgrund der Erhöhung des Windgeschwindigkeitsgrenzwertes G₁ schaltet die Windenergieanlage zukünftig erst bei höheren Windgeschwindigkeiten ein.

Die Erhöhung des Windgeschwindigkeitsgrenzwertes G₁ macht es unwahrscheinlicher, dass die Windenergieanlage nach dem Anfahren den Leistungsgrenzwert G₂ unterschreitet, weil bei höheren momentanen Windgeschwindigkeiten M₁ auch eine höhere mit der elektrischen Abgabeleitung M₂ positiv korrelierende durchschnittliche Windgeschwindigkeit zu vermuten ist. Somit wird einem ständigen An- und Abschalten der Windenergieanlage wirksam entgegen gewirkt. Empfindliche Bauteile wie etwa der Leistungsschalter des Generators, der auf eine beschränkte Anzahl von Schaltvorgängen ausgelegt ist, werden dadurch weniger belastet.

Günstigenfalls wird aus der gemessenen momentanen Windgeschwindigkeit M₁ am Maschinenhaus der Windenergieanlage ein durchschnittlicher Windgeschwindigkeitsgrenzwert am Maschinenhaus berechnet. Eine Mittlung der Windgeschwindigkeit über eine vorgegebene Zeitspanne glättet die der Anlagensteuerung zugeführten Messwerte vorab, und verringert die Gefahr eines unberechtigten Anfahrens der Anlage zusätzlich.

Gegebenenfalls kann auch vorgesehen sein, dass die Grenzwerte G₁, G₂ wieder auf ihren ursprünglich abgelegten Wert gesetzt werden, wenn die Anlage eine vorgebbare Betriebsdauer nach dem Anschalten durchgängig in Betrieb gewesen ist, weil diese den geographischen, klimatischen Bedingungen im zeitlichen Mittel am besten angepasst sind.

### Bezugszeichenliste:

- G₁: Windgeschwindigkeitsgrenzwert
- G₂: Abgabeleistungsgrenzwert
- M₁: Windgeschwindigkeit
- M₂: Abgabeleistung

## Patentansprüche

1. Verfahren zum Betreiben einer Windenergieanlage (WEA) indem beim Erreichen eines ersten vorgebbaren Grenzwertes (G) durch einen ersten Parameter (M₁) ein Prozess automatisch gestartet wird, dessen Ablauf durch Messen eines zweiten Parameters (M₂) und Vergleichen der Masswerte des zweiten Parameters (M₂) mit einem zweiten vorgebbaren Grenzwert (G₂) überwacht wird,
und bei Erreichen des zweiten Grenwertes (G₂) durch den zweiten Parameter (M₂) der erste Grenzwert (G₁) verändert wird und
eine minimale Betriebsdauer zwischen dem Startzeitpunkt des Prozesses und dem Zeitpunkt des ersten darauf folgenden Erreichens des zweiten Grenzwertes (G₂) vorgegeben wird und der erste Grenzwert (G₁) nur bei Unterschreiten der minimalen Betriebsdauer verändert wird.

2. Verfahren nach Anspruch 1,
**dadurch gekennzeichnet, dass** der Prozess beim Erreichen des zweiten Grenzwertes gestoppt oder rückgängig gemacht wird.

3. Verfahren nach Anspruch 1 oder 2,
**dadurch gekennzeichnet, dass** der Prozess durch den ersten oder wenigstens einen weiteren ersten Parameter, dem der erste bzw. wenigstens ein weiterer erster vorgebbarer Grenzwert zugeordnet wird, automatisch gestartet wird, wenn mindestens einer der ersten vorgebbaren Grenzwerte erreicht wird und bei Erreichen des zweiten Grenzwertes durch den zweiten Parameter nur der vor dem Starten des Prozesses erreichte Grenzwert verändert wird.

4. Verfahren nach wenigstens einem der vorstehenden Ansprüche,
**dadurch gekennzeichnet, dass** der erste vorgebbare Grenzwerte so geändert wird, dass das Erreichen des zweiten vorgebbaren Grenzwertes beim Ausführen des Prozesses unwahrscheinlicher wird.

5. Verfahren nach wenigstens einem der vorstehenden Ansprüche,
**dadurch gekennzeichnet, dass**, sofern der zweite Grenzwerte beim Durchführen des Prozesses nicht erreicht wird, der erste Grenzwerte so geändert wird, dass das Erreichen das zweiten Grenzwertes beim Ausführen des Prozesses wahrscheinlicher wird.

6. Verfahren nach wenigstens einem der vorstehenden Ansprüche,
**dadurch gekennzeichnet, dass** der erste Grenzwert um höchstens 20 % seines Absolutwertes verändert wird.

7. Verfahren nach wenigstens einem der vorstehenden Ansprüche,
**dadurch gekennzeichnet, dass** der erste Grenzwert innerhalb eines vorgebbaren Bereiches geändert wird.

8. Verfahren nach wenigstens einem der vorstehenden Ansprüche,
**dadurch gekennzeichnet, dass** der erste und/oder zweite Parameter fortlaufend gemessen werden.

9. Verfahren nach wenigstens einem der vorstehenden Ansprüche,
**dadurch gekennzeichnet, dass** als erster Parameter eine Drehzahl des Rotors und/oder eine Windgeschwindigkeit und/oder eine Temperatur und/oder eine elektrische Spannung und/oder eine Frequenz einer elektrischen Wechselspannung und als erster vorgebbarer Grenzwert in derselben Reihenfolge dem ersten Parameter entsprechend zugeordnet ein Drehzahlgrenzwert und/oder ein Vindgeschwindigkeitsgrenzwert und/oder ein Temperaturgrenzwert und/oder ein Spannungswert und/oder ein Frequenzwert gewählt wird.

10. Verfahren nach wenigstens einem der vorstehenden Ansprüche,
**dadurch gekennzeichnet, dass** als Prozess ein Anfahrvorgang oder ein Herunterfahrvorgang oder ein Verstellvorgang eines Rotorblatts oder ein Verstellvorgang der Windrichtungsnachführung oder eine Einstellung eines Drehmoments am Generator gewählt wird.

11. Verfahren nach wenigstens einem der vorstehenden Ansprüche,
**dadurch gekennzeichnet, dass** als zweiter Parameter die elektrische Abgabeleistung der Windenergieanlage und/oder der erzeugte Strom der Windenergieanlage und/oder eine Windgeschwindigkeit und/oder eine Drehzahl des Rotors und als zweiter vorgebbarer Grenzwert in derselben Reihenfolge dem zweiten Parameter entsprechend zugeordnet ein Leistungsgrenzwert und/oder ein Stromgrenzwert und/oder ein Windgeschwindigkeitsgrenzwert und/oder ein Drehzahlgrenzwert gewählt wird.

12. Verfahren nach Anspruch 1 oder 2,
**dadurch gekennzeichnet, dass** der veränderte erste Grenzwert nach einer vorgebbaren
Betriebszeit auf einen Normalgrenzwert zurückgesetzt wird.

13. Windenergieanlage zur Durchführung eines Verfahrens nach wenigstens einem der Ansprüche 1 bis 12.
mit einer ersten Messeinrichtung für einen ersten Parameter (M) und einer zweiten Messeinrichtung für einen zweiten Parameter (M₂) die mit einer Anlagensteuerung in Verbindung stehen, in der ein erster vorgebbarer Grenzwert (G₁) des ersten Parameters (M₁) und ein zweiter vorgebbarer Grenzwert (G₂) des zweiten Parameters (M₂) abgelegt sind, die beim Erreichen des ersten Grenzwertes (G₁) durch den ersten Parameter (M₁) einen Prozess automatisch startet und dessen Ablauf durch Vergleichen der Messwerte des zweiten Parameters (M₂) mit dem zweiten Grenzwert (G₂) uberwacht und beim Erreichen des zweiten Grenzwertes (G₂) durch den zweiten Parameter (M₂) den ersten vorgebbaren Grenzwert (G₁) verändert und
einem zeitmesser, der mit der Anlagensteuerung in Verbindung steht. In der eine minimale Betriebsdauer zwischen dem Startzeitpunkt des Prozesses und dem Zeitpunkt des ersten darauf folgenden Erreichens des zweiten Grenzwertes (G₂) abgelegt ist und die den ersten Grenzwert (G₁) nur bei Unterschreiten der minimalen Betriebsdauer verändert.

14. Windenergieanlage nach Anspruch 13,
**gekennzeichnet durch** eine Abschaltautomatik und **dadurch**, dass die Anlagensteuerung nach Erreichen des zweiten Grenzwertes die Abschaltautomatik ansteuert.

15. Windenergieanlage nach Anspruch 13 oder 14,
**dadurch gekennzeichnet, dass** die erste Messeinrichtung aus der Menge:
Drehzahlmesser, Anemometer, Thermometer, Spannungsmesser, Strommesser, Leistungsmesser, Frequenzmesser stammt.

16. Windenergieanlage nach wenigstens einem der Ansprüche 13, 14 oder 15,
**dadurch gekennzeichnet, dass** die zweite Messeinrichtung aus der Menge:
Drehzahlmesser, Anemometer, Strommesser, Leistungsmesser stammt.

## Claims

1. A method for operating a wind energy system (WEA) in that
when a first settable boundary value (G₁) is reached by a first parameter (M₁) a process is automatically started whose course is monitored by measuring a second parameter (M₂) and by comparing the measured values of the second parameter (M2) with a second settable boundary value (G₂)
and that the first settable boundary value (G₁) is changed upon reaching the second boundary value (G₂) by the second parameter (M₂) and
a minimum operating time is given between the starting time of the process and the time of the first following reaching of the second boundary value (G₂) and that the first boundary value (G₁) is changed only when the minimum operating time is dropped below

2. The method according to Claim 1,
**characterized in that** the process is stopped or reversed when the second boundary value is reached.

3. The method according to Claim 1 or 2,
**characterized in that** the process is automatically started by the first or at least another first parameter to which the first or at least another first settable boundary value is associated if at least one of the first settable boundary values is reached and when the second boundary value is reached by the second parameter only the boundary value reached before the start of the process is changed.

4. The method according to at least one of the previous claims,
**characterized in that** the first settable boundary value is changed in such a manner that the reaching of the second settable boundary value becomes more unlikely when carrying out the process.

5. The method according to at least one of the previous claims,
**characterized in that** to the extent that the second boundary value is not reached when carrying out the process, the first boundary value is changed in such a manner that the reaching of the second boundary value becomes more likely when executing the process.

6. The method according to at least one of the previous claims,
**characterized in that** the first boundary value is changed by at the most 20% of its absolute value.

7. The method according to at least one of the previous claims,
**characterized in that** the first boundary value is changed within a settable range.

8. The method according to at least one of the previous claims,
**characterized in that** the first and/or second parameter(s) is/are continuously measured.

9. The method according to at least one of the previous claims,
**characterized in that** a rotor speed and/or a wind speed and/or a temperature and/or an electrical voltage and/or a frequency of an electrical alternating voltage is/are selected as the first parameter and a speed boundary value and/or a voltage value and/or a frequency value appropriately associated in the same sequence with the first parameter is/are selected as the first settable boundary value.

10. The method according to at least one of the previous claims,
**characterized in that** a starting procedure or a slowing-down procedure or an adjustment procedure of a rotor blade or an adjustment procedure of the tracking of the wind direction or an adjusting of a torque on the generator is selected as process.

11. The method according to at least one of the previous claims, **characterized in that** the electrical output power of the wind energy system and/or the generated current of the wind energy system and/or a wind speed and/or a rotor speed is/are selected as the second parameter and a power boundary value and/or a current boundary value and/or a wind speed boundary value and/or a speed boundary value appropriately associated in the same sequence with the first parameter is/are selected as the second settable boundary value.

12. The method according to Claim 1 or 2,
**characterized in that** the changed first boundary value is set back after a settable operating time to a normal boundary value.

13. A wind energy system for carrying out a method in accordance with Claim 1 to 12, with a first measuring apparatus for a first parameter (M₁) and with a second measuring apparatus for a second parameter (M₂) that communicate with a system control in which a first settable boundary value (G₁) of the first parameter (M₁) and a second settable boundary value (G₂) of the second parameter (M₂) are filed that automatically starts a process when reaching the first boundary value (G1) by the first parameter (M₁) and whose course is monitored by comparing the measured values of the second parameter (M₂) to the second boundary value (G₂) and changes the first settable boundary value (G₁) when reaching the second boundary value (G₂) by the second parameter (M₂) and
a time meter that communicates with the system control, in which a minimum operating time is filed between the starting time of the process and the time of the first following reaching of the second boundary value (G₂) and which changes the first boundary value (G₁) only when the minimum operating time is dropped below.

14. The wind energy system according to Claim 13,
**characterized by** a cut-off automatic and in that the system control controls the cut-off automatic upon reaching the second boundary value.

15. The wind energy system according to Claims 13 to 14,
**characterized in that** the first measuring apparatus comes from the group of speed meter, anemometer, thermometer, voltage meter, current meter, power meter and frequency meter.

16. The wind energy system according to at least one of Claims 13, 14 or 15,
**characterized in that** the second measuring apparatus comes from the group of speed meter, anemometer, current meter and power meter.

## Revendications

1. Procédé pour faire fonctionner un système d'énergie éolienne (WEA), dans lequel, lorsqu'une première valeur limite (G₁) prescriptible est atteinte par un premier paramètre (M₁), un processus est démarré automatiquement, dont le déroulement est surveillé en mesurant un deuxième paramètre (M₂) et en comparant les valeurs mesurées du deuxième paramètre (M₂) avec une deuxième valeur limite (G₂) prescriptible et, lorsque la deuxième valeur limite (G₂) est atteinte par le deuxième paramètre (M₂), la première valeur limite (G₁) est modifiée, une durée de fonctionnement minimale entre l'instant de démarrage du processus et l'instant de la première atteinte suivante de la deuxième valeur limite (G₂) étant prescrite et la première valeur limite (G₁) n'étant modifiée que si la durée de fonctionnement minimale n'est pas atteinte.

2. Procédé selon la revendication 1, **caractérisé en ce que** le processus est arrêté ou annulé lorsque la deuxième valeur limite est atteinte.

3. Procédé selon la revendication 1 ou 2, **caractérisé en ce que** le processus est démarré automatiquement par le premier ou au moins un autre premier paramètre auquel la première ou au moins une autre première valeur limite prescriptible est associée lorsqu'au moins une des premières valeurs limites prescriptibles est atteinte et, en cas d'atteinte de la deuxième valeur limite par le deuxième paramètre, seule la valeur limite atteinte avant le démarrage du processus est modifiée.

4. Procédé selon au moins une des revendications précédentes, **caractérisé en ce que** la première valeur limite prescriptible est modifiée de façon que l'atteinte de la deuxième valeur limite prescriptible lors de l'exécution du processus devienne moins probable.

5. Procédé selon au moins une des revendications précédentes, **caractérisé en ce que** si la deuxième valeur limite n'est pas atteinte lors de l'exécution du processus, la première valeur limite est modifiée de façon que l'atteinte de la deuxième valeur limite lors de l'exécution du processus devienne plus probable.

6. Procédé selon au moins une des revendications précédentes, **caractérisé en ce que** la première valeur limite est modifiée au plus de 20 % de sa valeur absolue.

7. Procédé selon au moins une des revendications précédentes, **caractérisé en ce que** la première valeur limite est modifiée à l'intérieur d'une plage prescriptible.

8. Procédé selon au moins une des revendications précédentes, **caractérisé en ce que** le premier et/ou le deuxième paramètre sont mesurés en continu.

9. Procédé selon au moins une des revendications précédentes, **caractérisé en ce que** l'on choisit, comme premier paramètre, une vitesse de rotation du rotor et/ou une vitesse de vent et/ou une température et/ou une tension électrique et/ou une fréquence d'une tension alternative électrique et, comme première valeur limite prescriptible, associée au premier paramètre dans le même ordre, une valeur limite de vitesse de rotation et/ou une valeur limite de vitesse de vent et/ou une valeur limite de température et/ou une valeur de tension et/ou une valeur de fréquence.

10. Procédé selon au moins une des revendications précédentes, **caractérisé en ce que** l'on choisit comme processus un processus de démarrage ou un processus d'arrêt ou un processus de réglage d'une pale de rotor ou un processus de réglage de la poursuite de la direction du vent ou un réglage d'un couple sur l'alternateur.

11. Procédé selon au moins une des revendications précédentes, **caractérisé en ce que** l'on choisit comme deuxième paramètre la puissance électrique de sortie du système d'énergie éolienne et/ou le courant produit par le système d'énergie éolienne et/ou une vitesse de vent et/ou une vitesse de rotation du rotor et comme deuxième valeur limite prescriptible, associée au deuxième paramètre dans le même ordre, une valeur limite de puissance et/ou une valeur limite de courant et/ou une valeur limite de vitesse de vent et/ou une valeur limite de vitesse de rotation.

12. Procédé selon la revendication 1 ou 2, **caractérisé en ce que** la première valeur limite modifiée est ramenée à une valeur limite normale après un temps de fonctionnement prescriptible.

13. Système d'énergie éolienne pour réaliser un procédé selon au moins une des revendications 1 à 12, comprenant un premier dispositif de mesure pour un premier paramètre (M₁) et un deuxième dispositif de mesure pour un deuxième paramètre (M₂), lesquels sont reliés à une commande de système dans laquelle sont stockées une première valeur limite (G₁) prescriptible du premier paramètre (M₁) et une deuxième valeur limite (G₂) prescriptible du deuxième paramètre (M₂) et qui, lorsque la première valeur limite (G₁) est atteinte par le premier paramètre (M₁), démarre automatiquement un processus et surveille son déroulement en comparant les valeurs mesurées du deuxième paramètre (M₂) avec la deuxième valeur limite (G₂) et, lorsque la deuxième valeur limite (G₂) est atteinte par le deuxième paramètre (M₂), modifie la première valeur limite (G₁) prescriptible, et comprenant un chronomètre qui est relié à la commande de système dans laquelle est stockée une durée de fonctionnement minimale entre l'instant de démarrage du processus et l'instant de la première atteinte suivante de la deuxième valeur limite (G₂), la première valeur limite (G₁) n'étant modifiée que si la durée de fonctionnement minimale n'est pas atteinte.

14. Système d'énergie éolienne selon la revendication 13, **caractérisé par** un automatisme de coupure et en ce que la commande de système active l'automatisme de coupure lorsque la deuxième valeur limite est atteinte.

15. Système d'énergie éolienne selon la revendication 13 ou 14, **caractérisé en ce que** le premier dispositif de mesure est sélectionné parmi le groupe suivant :
compte-tours, anémomètre, thermomètre, voltmètre, ampèremètre, wattmètre, fréquencemètre.

16. Système d'énergie éolienne selon au moins une des revendications 13, 14 ou 15, **caractérisé en ce que** le deuxième dispositif de mesure est sélectionné parmi le groupe suivant : compte-tours, anémomètre, ampèremètre, wattmètre.
